Europäisches Patentamt

European Patent Office

Office européen des brevets

(11) Veröffentlichungsnummer: **0 464 241 A1**

# EUROPÄISCHE PATENTANMELDUNG

(21) Anmeldenummer: **90112716.7**

(22) Anmeldetag: **03.07.90**

(51) Int. Cl.5: **B60P 3/08**

(43) Veröffentlichungstag der Anmeldung:
**08.01.92 Patentblatt 92/02**

(84) Benannte Vertragsstaaten:
**DE FR GB IT**

(71) Anmelder: **Kässbohrer-Austria**
**Fahrzeugwerke GmbH**
**Peter-Pfenningerstrasse 26**
**A-5020 Salzburg(AT)**

(72) Erfinder: **Kraihamer, Mathias**
**Schaming 69**
**A-5301 Eugendorf(AT)**

(74) Vertreter: **Patentanwälte Grünecker,**
**Kinkeldey, Stockmair & Partner**
**Maximilianstrasse 58**
**W-8000 München 22(DE)**

(54) **Fahrzeug zum Transport von Fahrzeugen.**

(57) Bei Fahrzeugen zum Transport von Fahrzeugen mit wenigstens zwei durch vertikale Stelleinrichtung höhenverstellbaren Ladeplattformen ist eine Anpassung an die unterschiedliche Länge von verschiedenen Fahrzeugtypen nur begrenzt möglich. In vielen Fällen ist deshalb ein Teil des Transportraumes ungenutzt.

Eine größere Variabilität der Ladeplattformen bei gleichzeitig verbesserter Ausnutzung des Laderaums wird dadurch erreicht, daß eine um ihren in Fahrtrichtung vorderes Ende schwenkbar gelagerte Ladebühne vorhanden ist, die im Bereich ihres hinteren Endes mit einer vertikalen Stelleinrichtung verbunden ist. Die Ladebühne weist außerdem eine einschiebbare Verlängerungsplattform an ihrem hinteren Ende und eine mit ihr schwenkbar verbundene Kippplattform an ihrem vorderen Ende auf.

FIG. 2

Die Erfindung betrifft ein Fahrzeug zum Transport von Fahrzeugen mit wenigstens zwei durch vertikale Stelleinrichtungen höhenverstellbaren Ladeplattformen.

Es sind z. B. Fahrzeugtransporter bekannt, bei denen eine untere Ladeplattform fest ist und eine obere Ladeplattform relativ zur unteren höhenverstellbar ist. Zur Beladung des Transporters ist die obere Ladeplattform auf der unteren ablegbar und den zu transportierenden Fahrzeugen z. B. mit Hilfe einer Auffahrrampe zugänglich. Nach Beladung ist die obere Ladeplattform so weit anhebbar, daß die untere Ladeplattform ebenso mit Fahrzeugen beladen werden kann.

Entsprechende Fahrzeugtransporter sind auch mit zwei höhenverstellbaren Ladeplattformen bekannt, wobei dann die Beladung mit Fahrzeugen in drei Ebenen erfolgt. Der Beladevorgang verläuft analog zum oben beschriebenen Beispiel. Auf den Ladeplattformen sind die Fahrzeuge im wesentlichen in einer Reihe hintereinander angeordnet. Während des Transportes sind sie außerdem durch Sicherungseinrichtungen relativ zu den Ladeplattformen fixiert.

Nachteilig bei dieser Ausführungsform ist, daß bei verschiedenen Fahrzeugtypen eine Anpassung an die unterschiedlichen Fahzeuglängen nur unvollkommen bzw. gar nicht erfolgt. Während die Sicherungseinrichtungen vielleicht noch anpaßbar sind, ergeben sich bezügliche des Transporterraumes Nachteile. Falls z. B. von einem Fahrzeugtyp genau drei Fahrzeuge hintereinander auf einer Ladeplattform Platz haben, sind von einem längeren Fahrzeug nur noch zwei hintereinander transportierbar. Da die Länge dieser zwei Fahrzeuge in der Regel kürzer als von den drei Fahrzeugen ist, verbleibt ein Teil des Transporterraumes ungenutzt.

Bei einem weiteren Fahrzeugtransporter sind die Ladeplattformen an ihren Enden teilweise mit ausziehbaren Verlängerungen versehen, so daß eine Anpassung an unterschiedliche Fahrzeugtypen erfolgen kann. Dadurch ist eine Verbesserung der Raumausnutzung möglich.

Diese Möglichkeit ist bei Fahrzeugtransportern, die nicht eine in einer Ebene durchgehende Ladeplattform aufweisen, nur sehr begrenzt anwendbar. Da die Fahrzeuge z. B. bei einem zum Fahrzeugtransport ausgebildeten Sattelauflieger zumindest im Bereich des Zugfahrzeuges gegenüber den Ladeplattformen versetzte Ladeebenen aufweisen, ist ein Verlängern der Ladeplattformen in diesem Bereich nicht möglich, da die Fahrzeuge teilweise direkt vor einer Plattform oder Ebene angeordnet sind. Eine zur Verlängerung ausgebildete, ausziehbare Plattform würde in diesem Fall das Auto berühren und damit beschädigen.

Bei einem weiteren bekannten Fahrzeugtransporter sind die Ladeplattformen abschnittsweise verschwenkbar ausgebildet. Ein einem Fahrzeugtyp angepaßter Abschnitt ist dabei zumindest im Bereich der Vorderräder des Fahrzeuges nach oben verschwenkbar und teilweise fährt ein anderes Fahrzeug in den freigewordenen Raum unter der verschwenkten Plattform ein.

Von Nachteil bei dieser Ausführungsform ist, daß die Bauhöhe eines Transporters mit verschwenkbar angeordneten Plattformen durch die schräg gestellten Fahrzeuge größer ausgebildet sein muß als bei eben angeordneten Plattformen. Daher werden diese Fahrzeuge mit maximal zwei Ladeebenen gebaut und sind nur zur Aufnahme einer entsprechend relativ geringen Fahrzeuganzahl verwendbar.

Der Erfindung liegt daher die Aufgabe zugrunde, den Laderaum variabel zur Aufnahme von verschiedenen Fahrzeugtypen bei gleichzeitiger verbesserter Raumausnutzung auszubilden.

Diese Aufgabe wird dadurch gelöst, daß eine an ihrem in Fahrtrichtung vorderen Ende schwenkbar gelagerte Ladebühne vorhanden ist, die im Bereich ihres hinteren Endes mit einer vertikalen Stelleinrichtung verbunden ist, wobei die Ladebühne hinten eine einschiebbare Verlängerungsplattform aufweist und vorne mit ihr eine Kippplattform schwenkbar verbunden ist.

Auf diese Weise ist eine vorteilhafte Kombination von schwenkbarer und längenveränderlicher Ladefläche gegeben. Eine Anpassung an verschiedene Fahrzeuglängen ist in einfacher Weise durch die Verlängerungsplattform möglich. Ebenso ist bei anderen Fahrzeugen mit Hilfe der Kippplattform zusätzlicher Raum unterhalb dieser frei und zum Einfahren eines weiteren Fahrzeuges geeignet.

Weiterhin ist von Vorteil, daß die Ladebühne zumindest an einem Ende höhenverstellbar ist, während das andere Ende an einem Festpunkt gleitverschieblich gelagert ist. Dadurch ergibt sich eine günstige Zusammenwirkung zwischen Ladebühne und Ladeplattform, die eine variable Anpassung an verschiedene Fahrzeugtypen erlaubt.

Um eine einfache Beladung in Zusammenwirkung von Ladebühne und Ladeplattformen zu erhalten, ist es günstig, wenn die Ladebühne im wesentlichen vor den höhenverstellbaren Ladeplattformen angeordnet ist und zum überfahren mit Fahrzeugen mit ihrem hinteren Ende höhengleich mit einem vorderen Ende der jeweiligen Ladeplattformen verstellbar ist. Dies vereinfacht sowohl das Beladen der obersten Ladeplattform, indem die Ladebühne zwischen den beiden höhenverstellbaren Ladeplattformen mit jeweils einem Fahrzeug beladen hin und her schwenkbar ist. Außerdem wird in einfacher Weise erreicht, daß die Ladebühne direkt von der unteren Ladeplattform zugänglich ist. Zumindest die obere Ladeplattform muß durch das Zusammenwirken mit der Ladebühne weniger bzw.

gar nicht bewegt werden. Allein durch Verschwenken der Ladebühne ist ein Beladen dieser Plattform möglich.

Sowohl zum Verschwenken der Ladebühne zwischen den Ladeplattformen als auch um oberhalb und unterhalb der Ladebühne möglichst viel Platz zu erhalten, ist es günstig, wenn das vordere Ende der Ladebühne im wesentlichen mittig zur Transportstellung der Ladeplattformen angeordnet ist.

Um eine konstruktiv einfache Lösung mit variabler Benutzungsmöglichkeit zu erzielen, ist es von Vorteil, wenn die vorderen Enden der Ladeplattformen und das hintere Ende der Ladebühne zur unabhängigen Höhenverstellbarkeit mit jeweils einer Spindel einer gemeinsamer Spindelsäulen verbunden sind.

Bei einer vorteilhaften Ausführungsform der Erfindung, weist die Ladebühne zur Führung der Verlängerungsplattform zwei seitliche Längsführungen auf, die zur Durchführung der Plattform der Verlängerungsplattform geschlitzt sind. Dadurch ist es in konstruktiv einfacher Weise möglich, die Verlängerungsplattform aus- und einzuschieben. Zusätzliche Führungen außerhalb der Ladebühne sind nicht nötig. Gleichzeitig ist der Platzbedarf minimiert, da die Verlängerungsplattform in unmittelbarer Nähe der Ladebühne angeordnet ist.

Es erweist sich weiterhin als günstig, wenn über einen Teil der Gesamtlänge der Längsführungen zwischen diesen eine Trageplattform ausgebildet ist, wobei die Verlängerungsplattform unter diese einschiebbar ist. Da die Trageplattform sich nicht über die gesamte Länge der Längsführung erstreckt, ist der Raum zwischen den Längsführungen zumindest teilweise für ein Fahrzeug zugänglich. Ebenso ist es möglich, mit Hilfe der Verlängerungsplattform die Trageplattform zur Aufnahme eines Fahrzeuges zu verlängern. In diesem Fall weist die Verlängerungsplattform die nötigen Einrichtungen zur Sicherung des Kraftfahrzeuges auf. Die Spindeln zur Höhenverstellbarkeit sind am Ende der Längsführungen mit diesen verbunden.

Bei einer vorteilhaften Weiterbildung ist die Kippplattform längenverstellbar ausgebildet. So ist auch diese an beliebige Fahrzeugtypen anpaßbar und daher flexibel einsetzbar.

Um im verschwenkten Zustand der Kippplattform möglichst weit ein Fahrzeug unter diese zu fahren, ist es von Vorteil, wenn die Kipplattform aus seitlichen Tragschienen besteht, die zur Aufnahme und Sicherung der Räder eines Fahrzeuges im wesentlichen an ihren Enden Mulden enthalten. Da die Kipplattform im wesentlichen aus Tragschienen gebildet ist, ohne eine dazwischen zusätzlich angebrachte Plattform, ist ein weiteres Fahrzeug bis zwischen die Tragschienen an den Boden des verschwenkten Fahrzeuges heranführbar. Das verschwenkte Fahrzeug ist mit seinen Rädern in den Mulden abgestellt und gesichert. Die Kippplattform unterstützt das Fahrzeug nur punktuell an den Rädern, während der Raum zwischen den äußeren Tragschienen frei ist.

Für die Längenverstellbarkeit ist es günstig, wenn die Tragschienen teleskopartig ausgebildet sind. Auf diese Weise ist eine konstruktiv einfache Längenverstellbarkeit bei gleichzeitiger Minimierung des Platzbedarfes erreichbar.Nur die Mulden weisen Querverbindungen untereinander auf, während zwischen den teleskopartigen Trageschienen der gesamte Raum als Freiraum nutzbar ist.

Bei einer vorteilhaften Weiterbildung ist die Kippplattform mit Hilfe einer Verstelleinrichtung verschwenkbar. So ist es auf einfache Weise möglich, nach Abstellen eines Fahrzeuges auf der Kippplattform diese zu verschwenken.

Zur zusätzlichen Sicherung des Fahrzeuges auf der verschwenkten Kippplattform ist es von Vorteil, wenn die an den verschwenkbaren Enden der Kippplattform angeordnete Mulden in Richtung auf dieses Ende mit zunehmender Tiefe ausgebildet sind.

Um eine gute Befahrbarkeit der Ladebühne auch im nicht verschwenkten Zustand der Kipplattform zu erzielen, ist es günstig, wenn die Tragschienen der Kippplattform auf die Längsführungen der Ladebühne ablegbar sind, wobei ihre am verschwenkbaren Ende angeordneten Mulden oberhalb der Verlängerungsplattform zwischen den Längsführungen angeordnet sind. Z. B. beim Beladen der oberen Ladeplattform mit Hilfe der Ladebühne ist diese ohne große Schwierigkeiten durch die Fahrzeuge befahrbar. Nur im Bereich der Mulden wird die Kippplattform überfahren.

Um den Laderaum für Fahrzeuge weiter zu vergrößern, ist es von Vorteil, wenn das Fahrzeug als Fahrhausüberbau eine der Ladebühne vorgeordnete Zusatzplattform aufweist, die an einer Säule befestigt ist. So wird auch dieser Raum zum Transport eines weiteren Fahrzeuges genutzt.

In diesem Zusammenhang ist es weiterhin von Vorteil, wenn an dem der Ladebühne gegenüberliegenden Ende der Zusatzplattform eine verschwenkbare Schwenkplattform ausgebildet ist. Auf diese Weise ist auch ein größeres Fahrzeug transportierbar. Die Schwenkplattform ist an dem der Ladebühne benachbarten Ende nach oben verschwenkt und von einem Fahrzeug auf der Ladebühne teilweise unterfahrbar.

Eine Anpassung an verschiedene Fahrzeuglängen ist insbesondere dadurch erreichbar, daß die Schwenkplattform im wesentlichen eine durchgehende Tragoberfläche besitzt und am hinteren Ende ausziehbare Verlängerungen aufweist.

Um auch die Ladeplattformen in ihrer Länge variabel zu gestalten und zur optimalen Raumausnutzung eine möglichst gute Anpassung an verschiedene Fahrzeuglängen zu erhalten, weist wenigstens eine Ladeplattform zumindest an dem der Ladebühne benachbarten Ende eine einschiebbare Hilfsplattform auf.

Weiterhin ist es von Vorteil , wenn die Hilfsplattform bis unter die Tragoberfläche der Ladeplattform einschiebbar ist. Dadurch ist die Hilfsplattform leicht verstaubar und ein- bzw. ausschiebbar.

Damit es bei gewissen Fahrzeugtypen möglich ist, auch zwischen die Längsführungen der Ladeplattformen zu fahren und diesen Freiraum zu nutzen, ist es günstig, wenn die Tragoberfläche der Ladeplattform sich nur über einen Teil der Gesamtlänge der Ladeplattform erstreckt.

Um eine einfache Betätigung der ein- bzw. ausschiebbaren Plattformen zu erzielen, sind diese mit einem durch einen Antrieb bewegbaren Kolben verbunden. Der Antrieb ist z. B. als Hydraulikmotor ausgebildet und an das Hydrauliksystem des Zugfahrzeuges anschließbar. Alle Stelleinrichtungen, wie Hubspindeln, die Verstelleinrichtung der Kippplattform und die Bewegung der Verlängerungsplattformen sind so einfach und schnell betätigbar.

Bei einer weiteren Ausführungsform ist es von Vorteil, wenn die Ladebühne an beiden Enden höhenverstellbar ausgebildet ist. Auf diese Weise ist ein Einsatz der Ladebühne noch vielseitiger möglich. Z. B. läßt sie sich zum Beladen der oberen Ladeplattform in Art eines Aufzuges zwischen den Plattformen auf- und abfahren.

Im nachfolgenden wird ein Ausführungsbeispiel der Erfindung anhand einer Zeichnung beschrieben.

Es zeigt:

Fig. 1      den mit einem ersten Fahrzeugtyp beladenen erfindungsgemäßen Fahrzeugtransporter;

Fig. 2      den mit einem zweiten Fahrzeugtyp beladenen erfindungsgemäßen Fahrzeugtransporter;

Fig. 3      eine Seitenansicht der Ladebühne;

Fig. 4      eine Draufsicht auf die Ladebühne;

Fig. 5      einen Querschnitt der Ladebühne entlang der Linie V-V von Fig. 3 und

Fig. 6      einen Querschnitt der Ladebühne entlang der Linie VI-VI von Fig. 3.

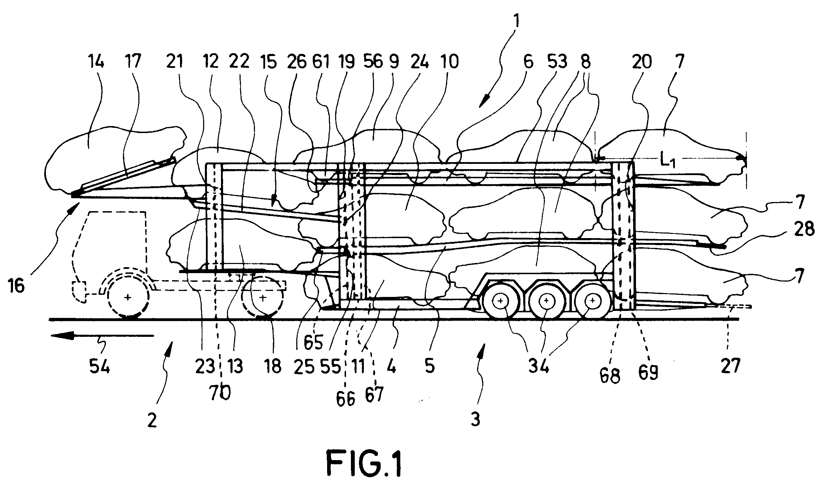

In Fig. 1 ist der Fahrzeugtransporter 1 dargestellt. Ein Zugfahrzeug 2 und ein Sattelauflieger 3 sind einander zum Transport von Fahrzeugen 7, 8, 9, 10, 11, 12, 13 und 14 zugeordnet. Der Sattelanhänger 3 ist aus einem tragenden Rahmen gebildet. Dieser umfaßt einen im wesentlichen horizontalen Unterrahmen, in dem ein 3-achsiges Achsaggregat 34 angeordnet ist. Vom Unterrahmen ist eine feste untere Ladeplattform 4 getragen. An deren in Fahrtrichtung gesehenem vorderen Ende und hinter dem Achsaggregat 34 ist der Rahmen durch zwei vertikale Spindelsäulen, nämlich eine mittlere Säule 19 und eine hintere Säule 20, gebildet.

In Richtung zum Zugfahrzeug 2 umfaßt der tragende Rahmen eine im wesentlichen parallel zum Unterrahmen nach oben versetzte und mit diesem und der Säule 19 verbundene Aufsattelplattform 18. Durch eine Kupplungseinrichtung, die auf der dem Zugfahrzeug 2 zugewandten Seite der Ausattelplattform 18 angeordnet ist, ist auf bekannte Weise eine lösbare Verbindung von Zugfahrzeug 2 und Sattelaufleger 3 herstellbar.

Als weiterer Bestandteil des Rahmens ist am vorderen Ende der Aufsattelplattform 18 eine parallel zu den Spindelsäulen 19 und 20 verlaufende, vordere Spindelsäule 21 angeordnet. Der obere Abschluß des Rahmens ist schließlich durch einen die höhengleichen oberen Enden der Spindelsäulen 19, 20 und 21 verbindenden, parallel zur unteren Plattform 4 bzw. zum Unterrahmen ausgebildeten Oberrahmen 53 gebildet.

In den genannten Spindelsäulen ist jeweils zur Höhenverstellbarkeit und Lagerung von Ladeplattformen 5 und 6 sowie einer Ladebühne 15 eine unterschiedliche Anzahl von Hubspindeln angeordnet. Die Spindeln sind jeweils zur unabhängigen Verstellbarkeit der Plattformen bzw. Ladebühne in Fahrtrichtung 54 hintereinander in den jeweiligen Säulen angeordnet. Die Säule 19 enthält drei Spindeln 65, 66, 67, die Säule 20 zwei Spindeln 68, 69 und Säule 21 eine Spindel 70.

Mit je einer der in den Spindelsäulen 19 und 20 angeordneten Spindel sind Ladeplattformen 5 und 6 verbunden. Ladeplattform 5 ist mit ihrem vorderen Ende 56 an einem Fixpunkt drehbar an der mittleren der drei Spindeln 65, 66 und 67 von Säule 19 angeordnet und an ihrem hinteren Ende gleitverschieblich an der vorderen Spindel 68 der Säule 20 gelagert. Ladeplattform 6 ist mit ihrem vorderen Ende 55 gleitverschieblich an der hinteren Spindel 67 an Säule 19 gelagert und an einem Fixpunkt drehbar mit der hinteren Spindel 69 von Säule 20 verbunden. In dem in Fig. 1 dargestellten Beladezustand sind die Plattformen 4, 5 und 6 nahezu mit gleichem Abstand parallel über einander und auf Abstand angeordnet.

Oberhalb der Aufsattelplattform 18 befindet sich eine Ladebühne 15. Diese ist mit ihrem vorderen Ende 23 an der Spindel 70 der Spindelsäule 21 gleitverschieblich und höhenveränderlich gelagert. An ihrem hinteren Ende ist sie an einem Fixpunkt der vorderen Spindel 65 der Spindelsäule 19 gelenkig und höhenverstellbar gehalten. Das vordere Ende 23 der Ladebühne 15 ist im Beladezustand in etwa höhenmittig zu den vorderen Enden 55 und 56 der Ladeplattformen 5 und 6 angeordnet. Das hintere Ende 24 erstreckt sich bis in die Nähe der vorderen Enden 55 und 56 der Ladeplattformen 5 und 6, damit ein überfahren mit Fahrzeugen zwischen Ladebühne 15 und Ladeplattformen 5 und 6 möglich ist.

An das vordere Ende 23 der Ladebühne 15 schließt sich als Fahrerhausüberbau eine Zusatzplattform 16 an. Sie ist an den Spindelsäulen 21 befestigt und weist zum Transport des Fahrzeugs 14 eine an ihrem vorderen Ende schwenkbar gelagerte Schwenkplattform 17 auf.

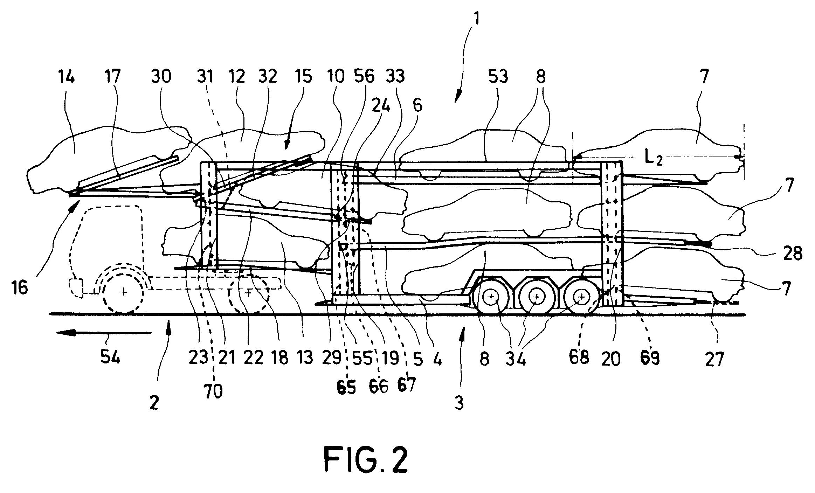

Zum Transport des in Fig. 1 dargestellten Fahrzeugtypes der Länge $L_1$ sind an verschiedenen Enden der Ladeplattformen 4, 5 und 6 Zusatz- oder Verlängerungsplattformen ausgefahren. Die obere Ladeplattform 6 ist zum Transport des Fahrzeugs 9 in Fahrtrichtung 54 oberhalb der Ladebühne 15 mit Hilfe der Hilfsplattform 26 verlängert. Die Hilfsplattform 26 ist, wie in Fig. 2 dargestellt ist, in das Ende 56 der Ladeplattform 6 einschiebbar ausgebildet.

Die Ladeplattform 5 weist an ihrem Ende 55 eine ausgeschobene Hilfsplattform 25 und an dem gegenüberliegenden Ende eine Hilfsplattform 28 auf. Mit Hilfe dieser beiden Hilfsplattformen 25 und 28 ist der Transport der Fahrzeuge 7, 8 und 10 auf der Ladeplattform 5 durchführbar. Entsprechend zur Hilfsplattform 26 bei Ladeplattform 6 sind die Hilfsplattformen 25 und 28 in die jeweiligen Enden der Ladeplattform 5 einschiebbar und versenkbar. Dies ist sowohl manuell als auch durch eine Stelleinrichtung realisierbar.

An der unteren Ladeplattform 4 ist am in zur Fahrtrichtung 54 hinten liegenden Ende eine Hilfsplattform 27 ausgefahren. So reicht die Länge der unteren Ladeplattform 4 zum Transport der Fahrzeuge 7, 8 und 11.

Aufsattelplattform 18, Ladebühne 15 und Zusatzplattform 16 tragen in Fig. 1 jeweils ein Fahrzeug 13, 12 bzw. 14.

Hilfsplattform 26 der Ladeplattform 6 ist als vollständige Ladeplattform mit durchgehender Tragoberfläche ausgebildet und liegt zwischen dem linken und rechten Längsträger der Ladeplattform 6. Wird die komplett beblechte Ladeplattform eingefahren, entsteht ein Freiraum zur Aufnahme eines Fahrzeugs zwischen linkem und rechtem Längsträger.

Das Fahrzeug 10 steht an der Ladebühne 15. Es ist mit seinem vorderen Teil zwischen den Längsführungen 22 der Ladebühne 15 bis an die Vorderräder des Fahrzeugs 12 eingefahren.

Ebenso ist die Aufsattelplattform 18 nur über einen Teil ihrer Länge mit Fahrzeugschienen versehen. Diese haben eine zur Aufnahme von Fahrzeug 13 ausreichende Länge. Im Bereich der Säule 19 ist die Plattform 18 durch Längsträger gebildet, die ein Fahrzeug 11 teilweise zwischen sich aufnehmen.

In Fig. 2 ist der Fahrzeugtransporter 1 mit einem anderen Fahrzeugtyp der Länge $L_2$ beladen. Die Länge $L_2$ ist größer als die Länge $L_1$ des ersten Fahrzeugtyps, so daß eine geringere Anzahl von Fahrzeugen transportierbar ist.

Teile, die Teilen aus Fig. 1 entsprechen, weisen die gleichen Bezugsziffern auf. Es wird im wesentlichen nur auf neue Merkmale eingegangen und im übrigen auf die Beschreibung zur Fig. 1 verwiesen.

Die Fahrzeuge 7 und 8 auf den Ladeplattformen 4, 5 und 6 sind entsprechend zu den Fahrzeugen 7 und 8 in Fig. 1 angeordnet. Aufgrund der größeren Länge $L_2$ der Fahrzeuge aus Fig. 2 ist es nicht möglich, jeweils ein drittes Fahrzeug auf den Ladeplattformen 4, 5 und 6 anzuordnen.

Fahrzeug 13 und 14 sind ebenso entsprechend der Fahrzeuge 13 und 14 aus Fig. 1 auf der Aufsattelplattform 18 bzw. der Schwenkplattform 17 angeordnet.

Im Bereich der Ladebühne 15 sind in Fig. 2 Fahrzeug 10 und 12 angeordnet. Fahrzeug 12 ist gegenüber dem Fahrzeug 12 aus Fig. 1 mit Hilfe der Kippplattform 30, die ein Teil der Ladebühne 15 bildet, nach oben verschwenkt. Die Kippplattform 30 ist am vorderen Ende 23 der Ladebühne 15 an den Längsführungen 22 schwenkbar gelagert. Mit Hilfe einer Verstelleinrichtung 31 ist z. B. durch einen hydraulischen Antrieb Kippplattform 30 relativ zu den Längsführungen 22 schwenkbar. Fahrzeug 12 und Fahrzeug 14 sind auf diese Weise im Transportzustand nahezu parallel zueinander ausgerichtet und um einen Winkel zur Fahrtrichtung 54 mit einem Fahrzeugende nach oben verkippt.

Die Kippplattform 30 ist so ausgebildet, daß Fahrzeug 10 im Bereich 32 in die Plattform einfahren kann. In diesem Bereich weist Kippplattform 30 nur zwei Längsstreben auf, die im Bereich von Vorder- und Hinterachse des Fahrzeugs 12 zur Aufnahme und Sicherung der Räder verbunden sind. Das Fahrzeug 10 ist in so einem vorderen Bereich auf einer die Längsführungen 22 verbindenden Plattform abgestellt. Sein hinterer Bereich ist auf einer Verlängerungsplattform 29 angeordnet, die am Ende 24 der Ladebühne 15 ein- und ausschiebbar ausgebildet ist. Entsprechend der Hilfsplattformen 26 bzw. 25 der Ladeplattformen 6 bzw. 5 aus Fig. 1 ist Verlängerungsplattform 29 am Ende 24 in die Längsführungen 22 einschieb- und versenkbar. Im Bereich 33 ist Fahrzeug 10 zwischen den Längsführungen der Ladeplattform 6 angeordnet. Das heißt, daß gemäß Fig. 1 Hilfsplattform 26 soweit in die Enden 56 der Ladeplattform 6 einschiebbar ist, daß im Bereich 33 keine Plattform bei der Ladeplattform 6 vorhanden ist.

In den folgenden Figuren ist insbesondere die Ladebühne 15 dargestellt, um die Transportmöglichkeiten nach Fig. 1 und Fig. 2 zu verdeutlichen.

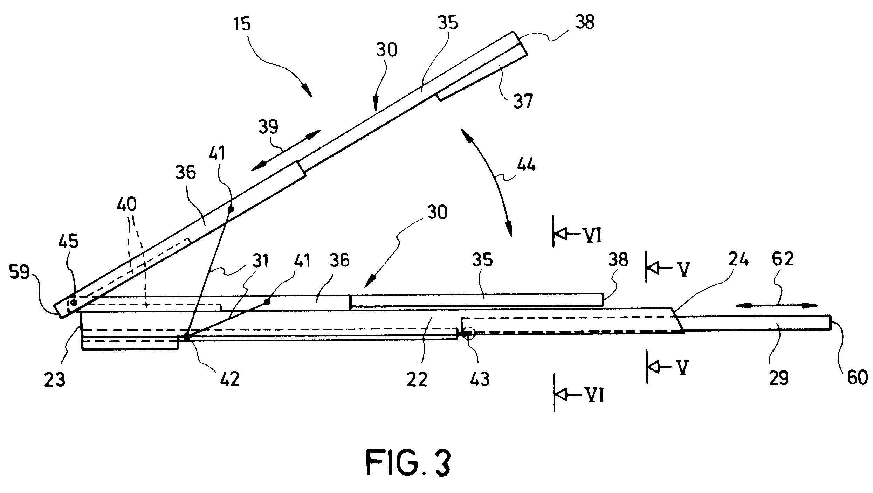

In Fig. 3 ist Ladebühne 15 in einer seitlichen Ansicht dargestellt. Kippplattform 30 ist sowohl in einem in Richtung 44 verschwenkten Zustand als auch im auf der Längsführung 22 abgelegten Zustand. Mit Hilfe der Verstelleinrichtung 31, die zwischen dem Fixpunktlager 42 an der Längsführung 22 und dem Schwenklager 41 an der Kippplattform 30 angeordnet ist, kann die Kippplattform z. B. hydraulisch verschwenkbar sein. Am Ende 59 der Kippplattform 30 ist diese durch ein Lager 45 am Ende 23 der Längsführungen 22 schwenkbar angeordnet.

Die Kippplattform 30 ist durch eine teleskopartige Ausbildung entlang der Richtungen 39 längenverstellbar. Tragschiene 35 ist z. B. mit Hilfe eines hydraulisch betriebenen Kolbens relativ zur Teleskoptrageschiene 36 beweglich. An den Enden 38 bzw. 59 der Kippplattform 30 sind Ladeplattformen mit Mulden 37 bzw. Aufstandflächen 40 angeordnet. Durch die Möglichkeit der Längenverstellbarkeit sind die Mulden an den Achsabstand eines beliebigen Fahrzeuges anpaßbar. Die Räder bzw. die Achsen des Fahrzeuges sind mit Hilfe der Mulden 37 und Aufstandsflächen 40 bezüglich der Kippplattform 30 fixierbar und das Fahrzeug ist bezüglich der Längsführungen 22 verschwenkbar. Zur zusätzlichen Sicherung des Fahrzeuges sind die Mulden 37 in Richtung des Endes 38 der Kippplattform 30 mit einer zunehmenden Tiefe ausgebildet.

Im nicht hoch verschwenkten Zustand verläuft die Kippplattform parallel zu den Längsführungen 22 und ist auf diesen ablegbar.

Innerhalb der Längsführungen 22 ist die Verlängerungsplattform 29 in Richtungen 45 verschiebbar gelagert. Mit einem Ende 60 ist die Verlängerungsplattform 29 vollständig in das Ende 24 der Längsführungen 22 einschiebbar und versenkbar. Der Ein- bzw. Ausschiebvorgang ist z. B. mit Hilfe eines Kolbens 43, der an dem dem Ende 60 gegenüberliegenden Ende der Verlängerungsplattform angeordnet ist, möglich. Der Kolben 43 ist z. B. hydraulisch betätigbar.

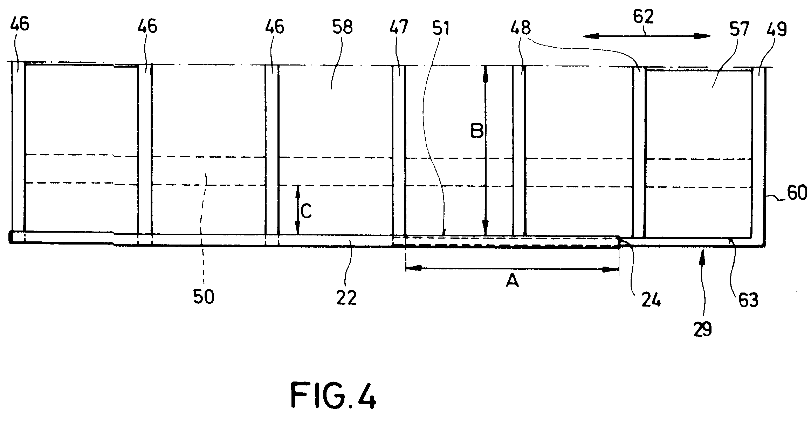

In Fig. 4 sind die Längsführungen 22 und Verlängerungsplattform 29 zur Hälfte in Draufsicht dargestellt. Die nicht dargestellte Hälfte ist analog aufgebaut.

Im rechten Winkel zu der Längsführung 22 sind Querstreben 46 und 47 in einer Ebene angeordnet. Zwischen diesen Querstreben sind Trageplattformen 58 zum Abstellen eines Fahrzeuges ausgebildet. Die Gesamtbreite der Ladebühne ist 2B. Das Fahrzeug bewegt sich entlang der Spur 50, so daß zwischen Fahrzeug und Längsführung 22 im wesentlichen der Abstand C frei bleibt.

Relativ zu den Längsführungen 22 ist die Verlängerungsplattform 29 in Richtungen 62 bewegbar. Die ist durch Querstreben 48 und 49 und dazwischen angeordnete Plattformen 57 gebildet. Auf der den Querstreben 48 bzw. 49 zugewandten Seite der Längsführungen 22 ist ein Schlitz 51 ausgebildet. Durch diesen Schlitz ist die Verlängerungsplattform 29 in das Ende 24 einschiebbar, bis die Querstrebe 49 unterhalb der Querstrebe 47 angeordnet ist. Das Ende 60 der Verlängerungsplattform 29 befindet sich dann in Höhe der Querstrebe 47 der Längsführungen 22. Daher ist zwischen Ende 24 und Querstrebe 47 auf der Länge A der Raum zwischen den gegenüberliegenden Längsführungen 22 frei. Da die Fahrzeuge eine im Vergleich zum Abstand von gegenüberliegenden Längsführungen 22 eine um 2C geringere Breite aufweisen, sind sie in den Bereich der Länge A von den Enden 24 her einfahrbar. Dies ist z. B. in Fig. 1 mit Hilfe von Fahrzeug 10 dargestellt.

In Fig. 2 dagegen ist Fahrzeug 10 auf einer gemäß der Darstellung in Fig. 4 ausgezogenen Verlängerungsplattform 29 abgestellt. In diesem Fall ist die gesamte Plattform entlang der Spur 50 befahrbar.

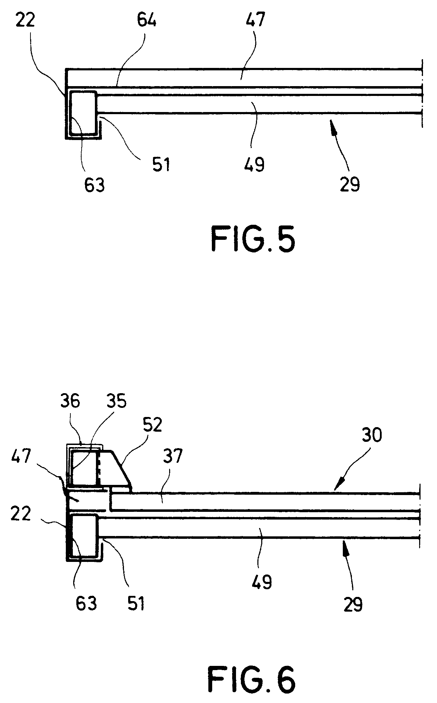

In Fig. 5 ist ein Querschnitt entlang der Linie V - V aus Fig. 3 der Ladebühne 15 dargestellt. Längsstreben 63 der Verlängerungsplattform 29 sind in der im wesentlichen L-förmig ausgebildeten Längsführung 22 verschiebbar gelagert. Senkrecht zur Längsstrebe 63 ist die Querstrebe 49 dargestellt. Mit Hilfe des Schlitz 51 ist die Querstrebe seitlich aus der Längsführung 22 herausgeführt. Parallel zur Querstrebe 49 erstreckt sich senkrecht zur Längsführung 22 die damit verbundene Querstrebe 47. Die Unterseite 64 der Querstrebe 47 bildet zusammen mit der L-förmigen Längsführung 22 die Führung für Längsstrebe 63 der Verlängerungsplattform 29. Da Querstrebe 49 relativ zum an der Querstrebe 47 im wesentlichen anliegenden Ende der Längsführung 63 versetzt ist, ist die Verlängerungsplattform 29 relativ zu den Längsführungen 22 leicht beweglich.

In Fig. 6 ist ein Querschnitt der Ladebühne 15 entlang der Linie VI - VI dargestellt.

Im Unterschied zu Fig. 5 ist oberhalb der Querstrebe 49 der Verlängerungsplattform 29 die Kippplattform 30 angeordnet. Tragschiene 35 und Teleskoptragschiene 36 sind im wesentlichen rechteckig und koaxial zueinander ausgebildet. Entlang der kürzeren Rechteckseite ist die Teleskoptragschiene 36 auf der Längsführung 22 abgelegt. Mit Hilfe eines Befestigungsflansches 52 ist die Mulde 37 mit der Tragschiene 35 verbunden. Auf diese Weise ist die Ladeplattform mit Mulde 37 parallel zur Querstrebe 47 bzw. Querstrebe 49 angeordnet. Da außerdem Mulde 37 unterhalb der Teleskoptragschiene 36 angeordnet ist, ist sie vor Querstrebe 47 in dem Bereich der Länge A zwischen den Längsführungen 22 ablegbar.

**Patentansprüche**

1. Fahrzeug zum Transport von Fahrzeugen mit wenigstens zwei durch vertikale Stelleinrichtungen höhenverstellbaren Ladeplattformen, **gekennzeichnet durch** eine an ihrem vorderen Ende (23) schwenkbar gelagerte Ladebühne (15), die wenigstens im Bereich ihres hinteren Endes (24) mit einer vertikalen Stelleinrichtung verbunden ist, wobei die Ladebühne (15) hinten eine einschiebbare Verlängerungsplattform (29) aufweist und vorne mit ihr eine Kippplattform (30) schwenkbar verbunden ist.

2. Fahrzeug nach Anspruch 1, **dadurch gekennzeichnet,** daß die Ladebühne (15) im wesentlichen vor den höhenverstellbaren Ladeplattformen (5, 6) angeordnet ist und zum überfahren mit Fahrzeugen mit ihrem hinteren Ende (24) höhengleich mit einem vorderen Ende (55, 56) der jeweiligen Ladeplattformen (5, 6) verstellbar ist.

3. Fahrzeug nach Anspruch 1 oder 2, **dadurch gekennzeichnet,** daß das vordere Ende (23) der Ladebühne (15) im wesentlichen höhenmittig zur Transportstellung der Ladeplattformen (5, 6) angeordnet ist.

4. Fahrzeug nach einem der vorhergehenden Ansprüche, **dadurch gekennzeichnet,** daß die vorderen Enden (55, 56) der Ladeplattformen (5, 6) und das hintere Ende (24) der Ladebühne (15) zur unabhängigen Höhenverstellbarkeit mit jeweils einer Spindel (65, 66, 67) einer gemeinsamen Spindelsäulen (19) verbunden sind.

5. Fahrzeug nach einem der vorangehenden Ansprüche, **adurch gekennzeichnet,** daß die Ladebühne (15) zur Führung der Verlängerungsplattform (29) zwei seitliche Längsführungen (22) aufweist, die zur Durchführung der Plattform (57) der Verlängerungsplattform (29) geschlitzt sind.

6. Fahrzeug nach einem der vorhergehenden Ansprüche, **dadurch gekennzeichnet,** daß über einen Teil der Gesamtlänge der Längsführungen (22) zwischen diesen eine Tragplattform (58) ausgebildet ist, wobei die Verlängerungsplattform (29) unter diese (58) einschiebbar ist.

7. Fahrzeug nach einem der vorangehenden Ansprüche, **dadurch gekennzeichnet,** daß die Kippplattform (30) längenverstellbar ist.

8. Fahrzeug nach einem der vorangehenden Ansprüche, **dadurch gekennzeichnet,** daß die Kippplattform (30) aus seitlichen Tragschienen (35, 36) besteht, die zur Aufnahme und Sicherung der Räder eines Fahrzeuges im wesentlichen an ihren Enden (38) Mulden (37) enthalten.

9. Fahrzeug nach einem der vorangehenden Ansprüche, **dadurch gekennzeichnet,** daß die Tragschienen (35, 36) zur Längenverstellbarkeit teleskopartig ausgebildet sind.

10. Fahrzeug nach einem der vorangehenden Ansprüche, **dadurch gekennzeichnet,** daß die Kippplattform (30) mit Hilfe einer Verstelleinrichtung (31) höhenverstellbar ist.

11. Fahrzeug nach einem der vorangehenden Ansprüche, **dadurch gekennzeichnet,** daß die an dem verschwenkbaren Enden (38) der Kippplattform (30) angeordneter Mulden (37) in Richtung auf dieses Ende mit zunehmender Tiefe ausgebildet ist.

12. Fahrzeug nach einem der vorangehenden Ansprüche, **dadurch gekennzeichnet,** daß die Tragschienen (35, 36) der Kippplattform (30) auf die Längsführungen (22) der Ladebühne (15) ablegbar sind, wobei ihre am verschwenkbaren Ende (38) angeordneten Mulden (37) oberhalb der Verlängerungsplattform (29) zwischen den Längsführungen (22) angeordnet sind.

13. Fahrzeug nach einem der vorangehenden Ansprüche, **dadurch gekennzeichnet,** daß das Fahrzeug (3) als Fahrhausüberbau eine der Ladebühne (15) vorgeordnete Zusatzplattform (16) aufweist, die an einer Säule (21) befestigt ist.

14. Fahrzeug nach Anspruch 13, **dadurch gekennzeichnet,** daß am vorderen Ende der Zusatzplattform (16) eine um eine horizontale Achse verschwenkbare Schwenkplattform (17) angeordnet ist.

15. Fahrzeug nach Anspruch 14, **dadurch gekennzeichnet,** daß die Schwenkplattform (17) im wesentlichen eine durchgehende Tragoberfläche besitzt und am hinteren Ende ausziehbare Verlängerungen aufweist.

16. Fahrzeug nach einem der vorangehenden Ansprüche, **dadurch gekennzeichnet,** daß wenigstens eine Ladeplattform (5, 6) zumindest an dem der Ladebühne (15) benachbarten Ende (55, 56) eine einschiebbare Hilfsplattform (25, 26) aufweist.

17. Fahrzeug nach Anspruch 16, **dadurch gekennzeichnet,** daß die Hilfsplattform (25, 26) bis unter die Tragoberfläche der Ladeplattform (5, 6) einschiebbar ist.

18. Fahrzeug nach einem der vorangehenden Ansprüche, **dadurch gekennzeichnet,** daß die Tragoberfläche der Ladeplattform (5, 6) sich nur über einen Teil der Gesamtlänge der Ladeplattform (5, 6) erstreckt.

19. Fahrzeug nach einem der Ansprüche 16 oder 17, **dadurch gekennzeichnet,** daß die Hilfsplattformen (25, 26) über ihre gesamte Länge eine durchgehende Tragoberfläche aufweisen.

20. Fahrzeug nach einem der vorangehenden Ansprüche, **dadurch gekennzeichnet,** daß Ladebühne (15) an beiden Enden (23, 24) mit Hilfe einer vertikalen Stelleinrichtung (65, 70) höhenverstellbar ausgebildet ist.

FIG.1

FIG.2

EP 0 464 241 A1

FIG. 3

FIG.4

EP 0 464 241 A1

FIG.5

FIG.6

| | Europäisches Patentamt | EUROPÄISCHER RECHERCHENBERICHT | Nummer der Anmeldung |
|---|---|---|---|

EP 90 11 2716

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | DE-U-8610072 (KÄSSBOHRER-AUSTRIA) * Seite 5, Zeile 18 - Seite 7, Zeile 10; Figuren 1-4 * | 1-3, 20 | B60P3/08 |
| A | | 7 | |
| Y | US-A-3104127 (SWARTZWELDER) * Figuren 1-15 * | 1-3, 20 | |
| A | | 4 | |
| A | US-A-4081196 (DANDRIDGE) * Figuren 1-6 * | 1, 5-10 | |
| A | DE-A-2908465 (GRUBERBAUER) * Figuren 1, 3, 4 * | 13, 14 | |
| A | US-A-3690717 (TAYLOR) | | |
| A | DE-U-8011608 (FARID) | | |

| RECHERCHIERTE SACHGEBIETE (Int. Cl.5 ) |
|---|
| B60P |

Der vorliegende Recherchenbericht wurde für alle Patentansprüche erstellt

| Recherchenort | Abschlußdatum der Recherche | Prüfer |
|---|---|---|
| BERLIN | 27 FEBRUAR 1991 | LUDWIG H.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

·········································································

& : Mitglied der gleichen Patentfamilie, übereinstimmendes Dokument

EPO FORM 1503 03.82 (P0403)